# EUROPEAN PATENT APPLICATION

(11) **EP 2 843 883 A2**
(43) Date of publication of application: **04.03.2015**
(21) Application number: 14180174.6
(22) Date of filing: 07.08.2014
(51) Int. Cl.: H04L 12/40

(54) **Data sharing system between master inverter and slave inverter**

(30) Priority: 28.08.2013 KR 20130102645
(71) Applicant: LSIS Co., Ltd., Anyang-si, Gyeonggi-do 431-848 (KR)
(72) Inventor: Chu, Jeong Hun, 431-848 Anyang-si, Gyeonggi-do (KR)
(74) Representative: Lang, Johannes

(57) **Abstract**

Disclosed is a data sharing system between a master inverter and a slave inverter, in which input/output ports between the master inverter and the slave inverter are selectively shared through background communication through Controller Area Network communication. In a data sharing system in which input/output devices between a mater inverter and a slave Inverter are shared, the master inverter determines the presence of outputting output data through the slave inverter, based on information on the presence of sharing a slave input/output device included in the slave inverter.

## Description

### BACKGROUND OF THE INVENTION

### 1. Field of the Invention

The present disclosure relates to a data sharing system between a master inverter and a slave inverter, and particularly, to a data sharing system between a master inverter and a slave inverter, in which input/output ports between the master inverter and the slave inverter are selectively shared through background communication through Controller Area Network (abbreviated as CAN hereinafter) communication.

### 2. Description of the Conventional Art

In general, an inverter for driving a motor has various input/output ports (or input/output devices) including a digital input (can be abbreviated as DI hereinafter), a digital output (can be abbreviated as DO hereinafter), an analog input (can be abbreviated as Al hereinafter), an analog output (can be abbreviated as AO hereinafter), and the like.

When a plurality of inverters form peer to peer (P2P), thereby forming a master inverter and a slave inverter, the master inverter shares predetermined input/output devices in the inverters through a built-in communication function. However, there is no control right in the slave inverter, and therefore, the slave inverter may not use its own input/output device.

In a main body of the inverter, a communication protocol is limited in notifying content of shared data. Therefore, the main body cannot recognize the contents of the shared data, which causes a problem in data reliability.

The master inverter cannot recognize the whole of the contents of the shared data due to direct communication between the input/output devices of inverters, and therefore, it is difficult to perform a precise control.

### [Prior Art Document]

(Patent Document 1) Korean Patent Application No. 10-2001-0019885

### SUMMARY OF THE INVENTION

Therefore, an aspect of the detailed description is to provide a data sharing system between a master inverter and a slave inverter, in which input/output ports between the master inverter and the slave inverter are selectively shared through background communication and CAN communication.

To achieve these and other advantages and in accordance with the purpose of this disclosure, as embodied and broadly described herein, a data sharing system in which input/output devices between a mater inverter and a slave inverter are shared, wherein the master inverter or the slave inverter is configured to determine communication, based on information on the presence of sharing a slave input/output device included in the slave inverter.

According to one aspect of this disclosure, as embodied and broadly described herein, a data sharing system in which input/output devices between a mater inverter and a slave inverter are shared, wherein the master inverter is configured to determine the presence of outputting output data through the slave inverter, based on information on the presence of sharing a slave input/output device included in the slave inverter.

According to another aspect of this disclosure, a data sharing system in which input/output devices between a mater inverter and a slave inverter are shared, wherein the master inverter is configured to determine the presence of receiving input data received through the slave inverter, based on information on the presence of sharing a slave input/output device included in the slave inverter.

According to still another aspect of this disclosure, the information on the presence of sharing the slave input/output device may include use permission information or unavailable information of the slave input/output device.

According to still another aspect of this disclosure, when the information on the presence of sharing the slave input/output device includes the use permission information, the master inverter may be configured to receive the input data transmitted from the slave inverter.

According to still another aspect of this disclosure, a data sharing system in which input/output devices between a mater inverter and a slave inverter are shared, wherein the slave inverter is configured to determine the presence of outputting output data requested from the master inverter, based on information on the presence of sharing a slave input/output device included in the slave inverter.

According to still another aspect of this disclosure, a data sharing system in which input/output devices between a mater inverter and a slave inverter are shared, wherein the slave inverter is configured to determine the presence of transmitting input data received through the slave inverter to the master inverter, based on information on the presence of sharing a slave input/output device included in the slave inverter.

According to still another aspect of this disclosure, the master inverter and the slave inverter may be configured to transmit/receive the information on the presence of sharing the slave input/output device by a background communication through a CAN communication protocol.

According to still another aspect of this disclosure, a data sharing system in which input/output devices between a mater inverter and a slave inverter are shared, wherein the slave inverter comprises: a slave main unit configured to perform a control function of the slave inverter; a slave input/output device connected to a master input/output device included in the master inverter to communicate with each other under the control of the slave main unit; and a slave keypad unit configured to set information on the presence of sharing the slave input/output device under the control of the slave main unit.

Further scope of applicability of the present application will become more apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from the detailed description.

### BRIEF DESCRIPTION OF THE DRAWING

The accompanying drawings, which are included to provide a further understanding of the invention and are incorporated in and constitute a part of this disclosure, illustrate exemplary embodiments and together with the description serve to explain the principles of the invention.

In the drawings:
FIG. 1 is a block diagram illustrating a configuration of a data sharing system according to an exemplary embodiment of this disclosure;
FIG. 2 is a diagram illustrating a connection relationship between inverters according to an exemplary embodiment of this disclosure;
FIG. 3 is a diagram illustrating a connection between input/output devices and input/output use of shared data according to an exemplary embodiment of this disclosure;
FIGS. 4 and 5 are diagrams illustrating flows of the shared data according to an exemplary embodiment of this disclosure;
FIG. 6 is a diagram illustrating a parameter screen configuration of a slave inverter keypad according to an exemplary embodiment of this disclosure;
FIG. 7 is a diagram illustrating a configuration of a background communication protocol according to an exemplary embodiment of this disclosure; and
FIG. 8 is a flowchart illustrating a control method of the data sharing system according to an exemplary embodiment of this disclosure.

### DETAILED DESCRIPTION OF EXEMPLARY EMBODIMENTS

Description will now be given in detail of the exemplary embodiments, with reference to the accompanying drawings. For the sake of brief description with reference to the drawings, the same or equivalent components will be provided with the same reference numbers, and description thereof will not be repeated.

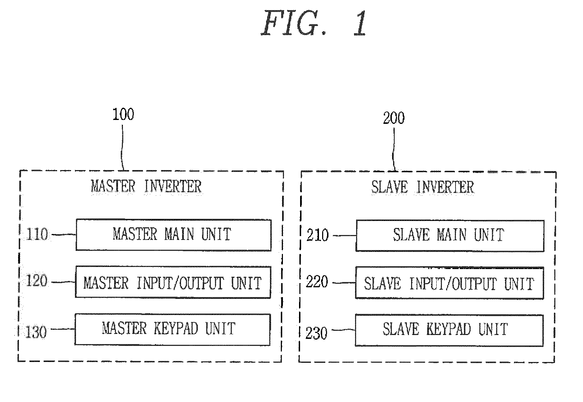

FIG. 1 is a block diagram illustrating a configuration of a data sharing system according to an exemplary embodiment of this disclosure.

As shown in FIG. 1, the data sharing system is configured with a master inverter 100 and a slave inverter 200. All components of the data sharing system shown in FIG. 1 are not essential components, and the data sharing system may be implemented by components of which number is greater than that of the components shown in FIG. 1. Alternatively, the data sharing system may be implemented by components of which number is smaller than that of the components shown in FIG. 1.

The master inverter 100, as shown in FIG. 1, is configured with a mater main unit 110, a master input/output device 120, and a master keypad unit 130.

The master main unit 110 performs most of control function of the mater inverter 100.

The master main unit 110 is connected to the mater input/output device 120 to communicate with each other in a background state through a Controller Area Network (abbreviated as CAN hereinafter) communication protocol communication line (hereinafter, referred to as a CAN communication line).

The master main unit 110 performs a P2P setting with the slave inverter 200 by controlling the master input/output device 120.

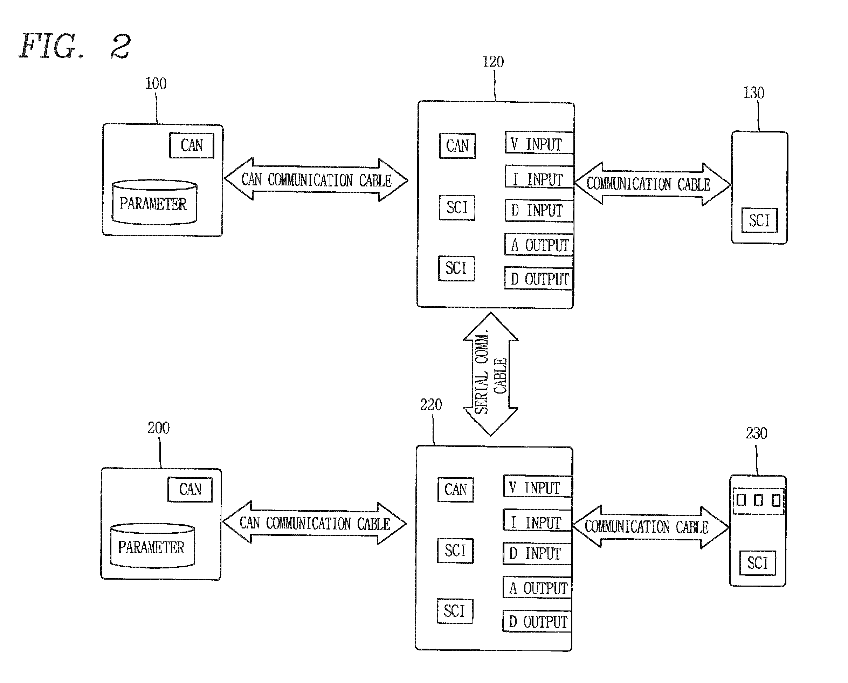

For example, the master main unit 110, as shown in FIG. 2, is connected to the master input/output device 120 to communicate with each other through the CAN communication line. The master main unit 110 is connected to the slave inverter 200 to communicate with each other through an RS-485 serial communication line.

The master main unit 110 waits for a response to the P2P connection to the slave inverter 200. In this state, the master main unit 110 generates a trip (i.e., a breaking) during waiting, and cancels the trip in the P2P connection to the slave inverter 200.

The master main unit 110 performs the P2P connection to the slave inverter 200, and background communication is also operated through a P2P protocol.

The master main unit 110 performs one or more predetermined functions respectively corresponding to one or more data transmitted/received to/from the slave inverter 200, based on information on the presence of sharing a slave input/output device of the slave inverter and the one or more data, through data transmission/reception to/from the slave inverter 200 via the master input/output device 120. When a plurality of data are transmitted/received, a plurality of functions respectively corresponding to the plurality of data may be simultaneously performed.

That is, the master main unit 110 uses or does not use arbitrary data transmitted from the slave inverter 200, through the data transmission/reception to/from the slave inverter 200 via the master input/output device 120.

When there are output data to be output through a slave input/output device 220 included in the slave inverter, the master main unit 110 transmits the output data and output device request information to the slave inverter 200 through the master input/output device 120. In this state, the output data transmitted from the master main unit 110 to the slave inverter 200 are output or are not output to the exterior through the slave input/output device 220, based on predetermined information on the presence of sharing the slave input/output device of the slave inverter 200.

When there are input data to be transmitted to (or used in) the mater inverter 100 among input data received through the slave inverter 200, the master main unit 110 receives or does not receive, through the master input/output device 120, the input data received through the slave inverter 200 by checking the predetermined information on the presence of sharing the slave input/output device of the slave inverter 200.

The master main unit 110 monitors, through the master keypad unit 130, input/output data input/output (or transmitted/received) between the internal components 110, 120 and 130 in the master inverter 100 and input/output data input/output between the master input/output device 120 and the slave inverter 200, and selectively uses the monitored input/output data.

The master main unit 110 transmits an operation command and/or a stop command to the master inverter 100 and/or the slave inverter 200 through the CAN communication line and/or the RS-485 communication line, and the corresponding inverter 100 or 200 receiving the corresponding operation command and/or the corresponding stop command performs a function corresponding to the operation command and/or the stop command.

The master input/output device (or master IO unit) 120 is connected to the slave input/output device 220 included in the slave inverter 200 to communicate with each other through a communication scheme such as RS-485, under the control of the master main unit 110.

The master input/output device 120 is connected to the master main unit 110 to communicate with each other through CAN communication. The master input/output device 120 is connected to the master keypad unit 130 to communicate with each other through wired or wireless communication.

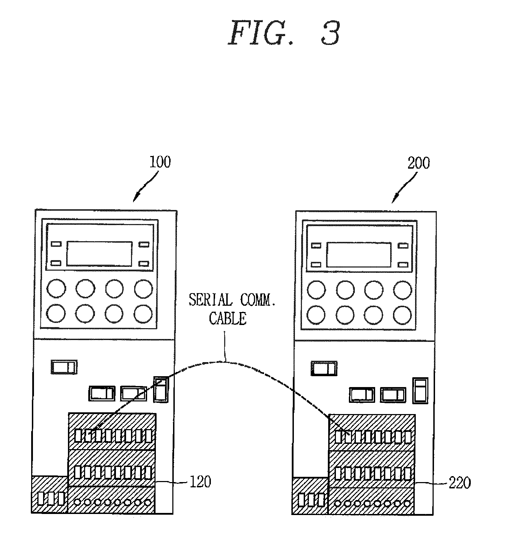

For example, the master input/output device 120, as shown in FIG. 3, is connected to the slave input/output device 220 through a RS-485 communication cable.

The master input/output device 120 uses (in other words "controls" or "allocates") a plurality of analog/digital input/output ports included in the master input/output device 120 under the control of the master main unit 110. Here, the number of the analog/digital input/output ports included in the master input/output device 120 may be variously set depending on the use of the inverter and/or a user's setting.

The master keypad unit 130 displays a most of operation state of the mater inverter 100.

The master keypad unit 130 generates an operation command and/or a stop command according to an operator's arbitrary manipulation (in other words "touch" or "selection").

The slave inverter 200, as shown in FIG. 1, comprises a slave main unit 210, the slave input/output device 220, and a slave keypad unit 230.

The slave main unit 210 performs a most of control function of the slave inverter 200.

The slave main unit 210 is connected to the slave input/output device 220 to communicate with each other in the background state through the CAN communication line.

The slave main unit 210 performs a P2P connection to the master inverter 100 by controlling the slave input/output device 220.

For example, the slave main unit 210, as shown in FIG. 2, is connected to the slave input/output device 220 to communicate with each other through the CAN communication. The slave main unit 210 is connected to the master inverter 100 to communicate with each other through the RS-485 serial communication.

The slave main unit 210 performs the P2P connection to the master inverter 100, and the slave main unit 210 also operates the background communication through the P2P protocol.

The slave main unit 210 performs one or more predetermined functions respectively corresponding to one or more data input/output through the slave input/output device 220, based on information on the presence of sharing the slave input/output device, through data transmission/reception between the master input/output device 120 and the slave input/output device 220. When a plurality of data are transmitted/received, a plurality of functions respectively corresponding to the plurality of data may be simultaneously performed.

That is, the slave main unit 210 uses or does not use arbitrary data transmitted from the master input/out device 120, through the data transmission/reception between the master input/output device 120 and the slave input/output device 220.

When receiving data transmitted from the exterior (e.g., including a sensor, a Programmable Logic Controller, an upper-level controller, and the like, each connected to the master inverter 100 and the slave inverter 200) through the slave input/output device 220, the slave main unit 210 selectively uses the received data.

The slave main unit 210 receives the output data and the output device request information of the master inverter 100, transmitted from the mater input/out device 120 through the slave input/output device 220.

The slave main unit 210 determines the presence of outputting the received output data of the master inverter 100 to the exterior through the slave input/output device 220, based on predetermined information on the presence of sharing the slave input/output device 220 through the slave keypad unit 230.

That is, when unavailable information is included in the predetermined information on the presence of sharing the slave input/output device 220, the salve main unit 210 does not output the output data of the master inverter 100 to the exterior, received through the slave input/output device 220.

When use permission information is included in the predetermined information on the presence of sharing the slave input/output device 220, the slave main unit 210 outputs the output data of the master inverter 100, received through the slave input/output device 220, to the exterior through the slave input/output device 220.

When there are input data to be transmitted to (or used in) the master inverter 100 among input data received through the slave input/output device 220, the slave main unit 210 determines the presence of transmitting the received input data to the master inverter 100, based on the predetermined information on the presence of sharing the slave input/output device 220.

That is, when unavailable information is included in the predetermined information on the presence of sharing the slave input/output device 220, the slave main unit 210 does not transmit the input data received through the slave input/output device 220 to the master inverter 100.

When use permission information is included in the predetermined information on the presence of sharing the slave input/output device 220, the slave main unit 210 transmits the input data received through the slave input/output device 220 to the master inverter 100 through the master input/output device 120.

The slave main unit 210 monitors, through the slave keypad 230, input/output data input/output (or transmitted/received) between the internal components 210, 220 and 230 in the slave inverter 200 and input/output data input/output between the master input/output device 120 and the slave inverter 200, and selectively use the monitored input/output data.

The slave main unit 210 performs a corresponding function, based on an operation command and/or a stop command with respect to the slave inverter 200.

The slave main unit 210 performs a corresponding function, based on an operation command and/or a stop command, transmitted from the master inverter 100.

The slave input/output device (in other words slave IO unit) 220 is connected to the master input/output device 120 included in the master inverter 100 to communicate with each other through a media of the communication scheme such as the RS-485, under the control of the slave main unit 210.

The slave input/output device 220 is connected to the slave main unit 210 to communicate with each other through the CAN communication. The slave input/output device 220 is connected to the slave keypad unit 230 to communicate with each other through the wired or wireless communication.

For example, the slave input/output device 220, as shown in FIG. 3, is connected to the master input/output device 120 through the RS-485 communication cable.

The slave input/output device 220 uses (in other words controls or allocates) a plurality of analog/digital input/output ports included in the slave input/output device 220 under the control of the slave main unit 210. Here, the number of the analog/digital input/output ports included in the slave input/output device 220 may be variously set depending on the use of the inverter and/or a user's setting.

As such, the master input/output device 120 and the slave input/output device 220 directly communicate with each other through an RS-485 serial communication cable.

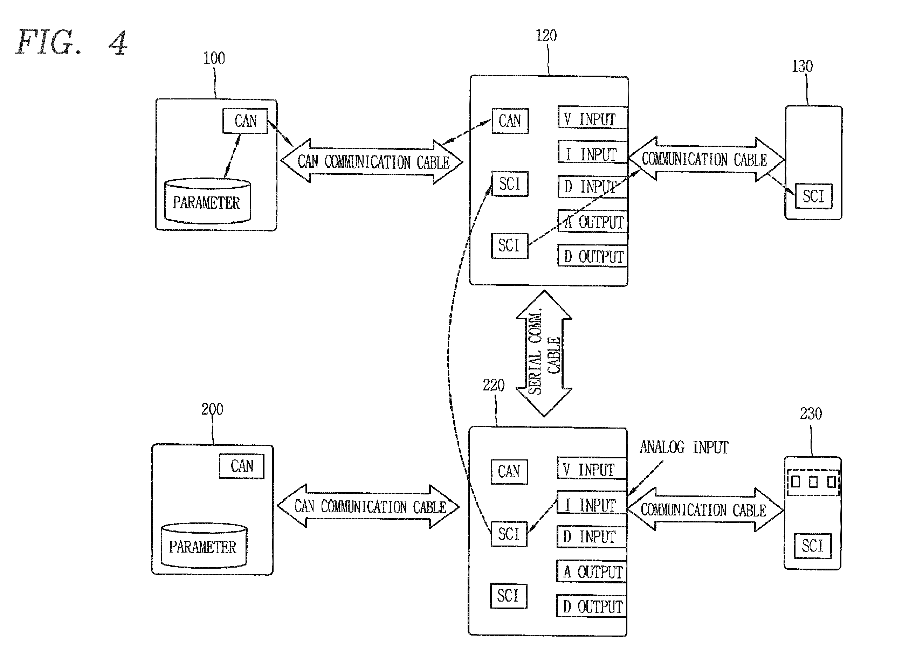

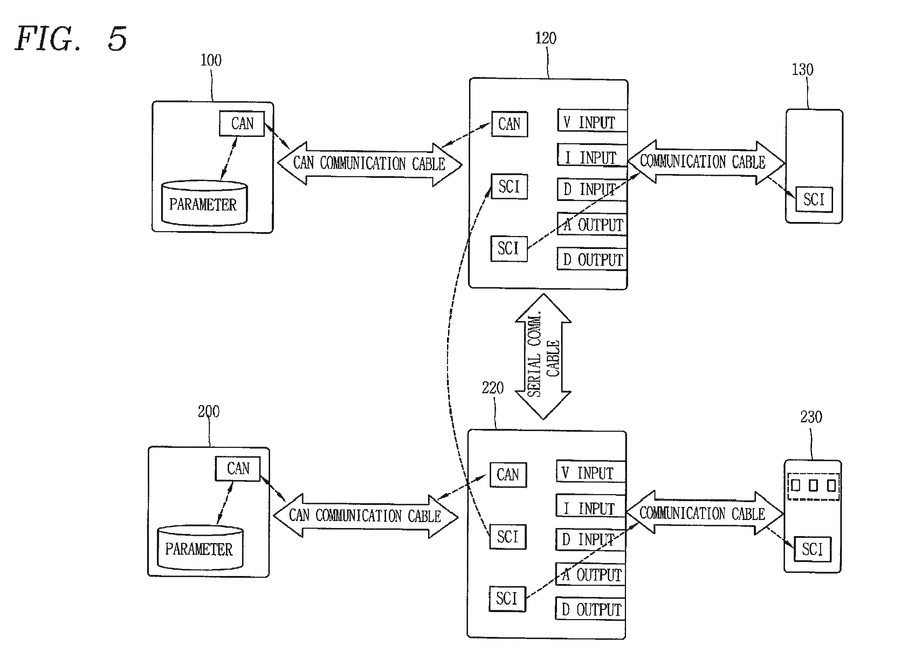

Flows of input and output data between the master inverter 100 and the slave inverter 200 are as shown in FIGS. 4 and 5.

That is, FIG. 4 is a diagram illustrating a flow of the input data between the master inverter 100 and the slave inverter 200. The internal components 110 and 120 in the master inverter 100 are connected through the CAN communication, and the master inverter 100 and the slave inverter 200 are connected through the RS-485 serial communication. The presence of transmitting the input data received in the slave inverter 200 to the master inverter 100 is determined based on the predetermined information on the presence of sharing the slave input/output device 220 of the slave inverter 200.

FIG. 5 is a diagram illustrating a flow of the output data between the master inverter 100 and the slave inverter 200. The presence of outputting the output data transmitted from the master inverter 100 through the slave inverter 200 is determined based on the predetermined information on the presence of sharing the slave input/output device 220 of the slave inverter 200.

The slave keypad unit 230 displays a general operation state of the slave inverter 200.

The slave keypad unit 230 generates an operation command and/or a stop command according to an operator's arbitrary manipulation (in other words touch or selection).

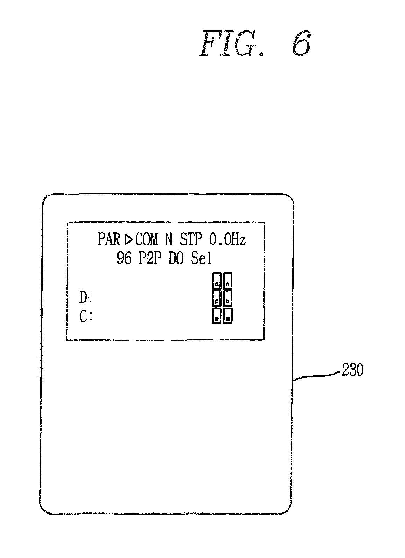

The slave keypad unit 230, as shown in FIG. 6, sets the information on the presence of sharing the slave input/output device 220 according to the operator's manipulation.

That is, the slave keypad unit 230 sets the information on the presence of sharing the slave input/output device 220, based on a use permission or unavailable item touched (in other words checked or selected) on a screen displayed in the slave keypad unit 230. Here, the information on the presence of sharing the slave input/output device 220 includes user permission information (or use permission) or unavailable information (or unavailability).

In the exemplary embodiment, a corresponding function is set on the screen displayed in the slave keypad unit 230 in the setting of the information on the presence of sharing the slave input/output device 220. However, the present invention is not limited thereto, and the information on the presence of sharing the slave input/output device 220 may be set through an on/off button (or on/off switch) formed on one surface of the slave keypad unit 230 or the slave input/output device 220.

As such, the master inverter 100 and/or the slave inverter 200 may monitor input/output data respectively input/output in the master inverter 100 and/or the slave inverter 200, using the master keypad unit 130 and/or the slave keypad unit 230, and change and/or store the corresponding input/output data.

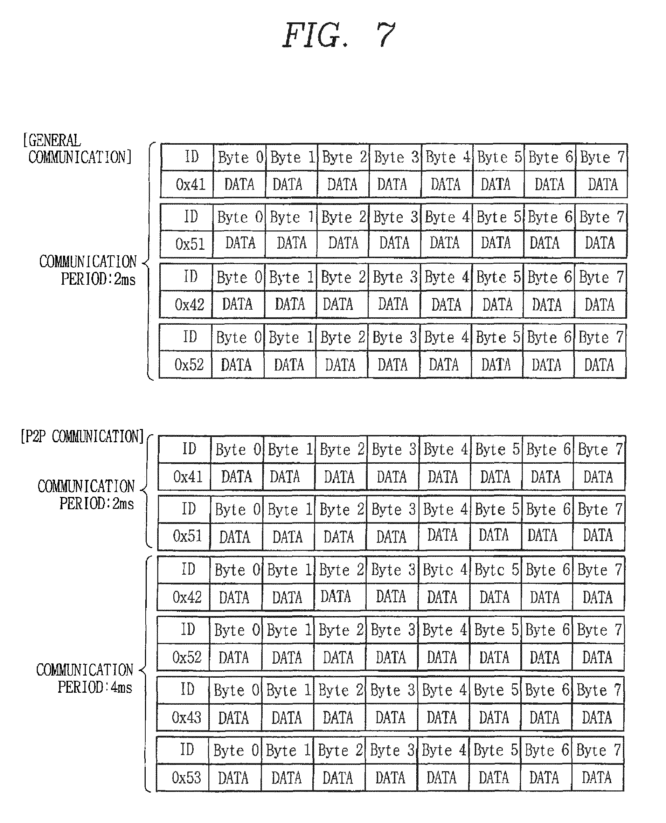

The configuration of a background communication protocol of the master inverter 100 and the slave inverter 200 is as shown in FIG. 7.

That is, additional information of P2P communication may be exchanged without greatly varying a period of 2ms (millisecond) in general communication.

If the master inverter 100 and the slave inverter 200 are connected through the P2P communication, the communication order is changed from 0x41 ↔0x51, 0x42↔0x52, 0x41↔0x51, ... to 0x41↔0x51, 0x42↔0x52, 0x41↔0x51, 0x43↔0x53, .....

In case of the P2P communication, a protocol is added because of the exchange of the additional information. However, information of important 8 bytes is maintained in the period of 2ms, and information of less important 8 bytes and information of added 8 bytes are treated in a period of 4ms. Thus, additional data can be transmitted without having influence on the background communication.

As such, input/output ports between the master inverter and the slave inverter can be selectively shared through the background communication through the CAN communication.

Hereinafter, a control method of the data sharing system according to an exemplary embodiment will be described in detail with reference to FIGS. 1 to 8.

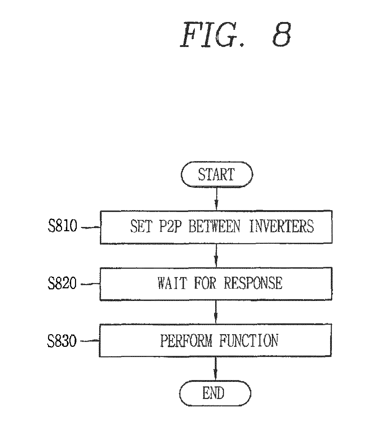

FIG. 8 is a flowchart illustrating a control method of the data sharing system according to an exemplary embodiment of this disclosure.

First, a P2P connection is performed between a plurality of arbitrary inverters 100 and 200.

That is, the P2P connection is performed between the master inverter 100 and the slave inverter 200 (S810).

Subsequently, the master inverter 100 waits for a response to the P2P connection to the slave inverter 200. In this state, the master inverter 100 generates a trip during waiting for the response, and cancels the trip in the P2P connection to the slave inverter 200.

The master inverter 100 performs the P2P connection to the slave inverter 200, and the background communication is also operated through the P2P protocol (S820).

Subsequently, the master inverter 100 performs one or more predetermined functions respectively corresponding to one or more data transmitted/received to/from the slave inverter 200, based on information on the presence of sharing the slave input/output device of the slave inverter 200 and the one or more data, through data transmission/reception to/from the slave inverter 200.

The slave inverter 200 performs the one or more predetermined functions respectively corresponding to one or more data input/output through the slave inverter 200, based on the information on the presence of sharing the slave input/output device, through data transmission/reception to/from the master inverter 100. When a plurality of data are transmitted/received, a plurality of functions respectively corresponding to the plurality of data may be simultaneously performed.

As an example, when there are output data to be output through the slave input/output device 220 included in the slave inverter 200, the master inverter 100 transmits the output data and output device request information to the slave inverter 200. Subsequently, the slave inverter 200 receives the output data and the output device request information, transmitted from the master inverter 100, and outputs or does not output the output data transmitted from the master inverter 100 through the slave input/output device 220 of the slave inverter 200 by checking the predetermined information on the presence of sharing the slave input/output device of the slave inverter 200.

That is, when use permission information is included in the predetermined information on the presence of sharing the slave input/output device of the slave inverter 200, the slave inverter 200 outputs, through the slave input/output device 220, the output data received through the slave inverter 200. When unavailable information is included in the predetermined information on the presence of sharing the slave input/output device of the slave inverter 200, the slave inverter 200 does not output, through the slave input/output device 220, the output data received through the slave inverter 200.

As such, the slave inverter 200 may use or not use the output data, based on the presence of sharing the slave input/output device of the slave inverter 200.

As another example, when there are input data to be transmitted to (or used in) the mater inverter 100 among input data received through the slave input/output device 220, the slave inverter 200 transmits or does not transmit input data received through the slave inverter 200 to the master inverter 100 by confirming the predetermined information on the presence of sharing the slave input/output device of the slave inverter 200.

That is, when use permission information is included in the predetermined information on the presence of sharing the slave input/output device of the slave inverter 200, the slave inverter 200 transmits input data received through the slave input/output device 220 to the master inverter 100. When unavailable information is included in the predetermined information on the presence of sharing the slave input/output device of the slave inverter 200, the slave inverter 200 does not transmit the input data received through the slave input/output device 220 to the master inverter 100.

As such, the slave inverter 200 may transmit or not transmit the input data received through the slave input/output device 220 to the master inverter 100, based on the information on the presence of sharing the slave input/output device of the slave inverter 200.

As still another example, the master inverter 100 monitors input/output data input/output in the master inverter 100 and input/output data input/output through the slave inverter 200, and selectively uses the corresponding input/output data.

The slave inverter 200 monitors input/output data input/output in the slave inverter 200 and input/output data input/output through the master inverter 200, and selectively uses the corresponding input/output data.

As still another example, the master inverter 100 transmits an operation command and/or a stop command with respect to the master inverter 100 and/or the slave inverter 200, and the inverter 100 or 200 receiving the corresponding operation command and/or the corresponding stop command performs a corresponding function.

The slave inverter 200 performs a corresponding function, based on an operation command and/or a stop command with respect to the slave inverter 200 (S830).

In the data sharing system between the master inverter and the slave inverter according to the present invention, input/output ports between the master inverter and the slave inverter are selectively shared through the background communication through the CAN communication, so that it is possible to use highly reliable and accurate data. Further, an extension module is not added, so that it is possible to reduce cost.

The foregoing embodiments and advantages are merely exemplary and are not to be construed as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A data sharing system **characterized in that** the data sharing system (10) in which input/output devices between a mater inverter (100) and a slave inverter (200) are shared, wherein the master inverter (100) or the slave inverter (200) is configured to determine communication, based on information on the presence of sharing a slave input/output device (220) included in the slave inverter (200).

2. The data sharing system according to claim 1, wherein the master inverter (100) is configured to determine the presence of outputting output data through the slave inverter (200), based on information on the presence of sharing a slave input/output device (220) included in the slave inverter (200).

3. The data sharing system according to claim 1 or 2, wherein the master inverter is configured to determine the presence of receiving input data received through the slave inverter (200), based on information on the presence of sharing a slave input/output device (220) included in the slave inverter (200).

4. The data sharing system according to any one of claims 1 to 3, wherein the information on the presence of sharing the slave input/output device (220) includes use permission information or unavailable information of the slave input/output device (220).

5. The data sharing system according to any one of claims 1 to 4, wherein, when the information on the presence of sharing the slave input/output device (220) includes the use permission information, the master inverter (100) is configured to receive the input data transmitted from the slave inverter (200).

6. The data sharing system according to any one of claims 1 to 5, wherein the slave inverter (200) is configured to determine the presence of outputting output data requested from the master inverter (100), based on information on the presence of sharing a slave input/output device (220) included in the slave inverter (200).

7. The data sharing system according to any one of claims 1 to 5, wherein the slave inverter (200) is configured to determine the presence of transmitting input data received through the slave inverter (200) to the master inverter (100), based on information on the presence of sharing a slave input/output device (220) included in the slave inverter (200).

8. The data sharing system according to any one of claims 1 to 7, wherein the master inverter (100) and the slave inverter (200) are configured to transmit/receive the information on the presence of sharing the slave input/output device (220) through background communication through a Controller Area Network communication protocol.

9. The data sharing system according to any one of claims 1 to 8, wherein the slave inverter (200) comprises:
a slave main unit (210) configured to perform a control function of the slave inverter (200);
a slave input/output device (220) connected to a master input/output device (120) included in the master inverter (100) to communicate with each other under the control of the slave main unit (210); and
a slave keypad unit (230) configured to set information on the presence of sharing the slave input/output device (220) under the control of the slave main unit (210).
